(19) Europäisches Patentamt / European Patent Office / Office européen des brevets

(11) **EP 4 230 039 B1**

(12) **EUROPEAN PATENT SPECIFICATION**

(45) Date of publication and mention
of the grant of the patent:
**10.12.2025 Bulletin 2025/50**

(21) Application number: **22382129.9**

(22) Date of filing: **17.02.2022**

(51) International Patent Classification (IPC):
*A01N 25/12* (2006.01)     *A01N 35/02* (2006.01)
*A01N 43/90* (2006.01)     *A01N 65/28* (2009.01)
*A01P 3/00* (2006.01)

(52) Cooperative Patent Classification (CPC):
(C-Sets available)
A01N 65/28; A01N 25/12; A01N 35/02;
A01N 43/90; A01P 3/00               (Cont.)

(54) **COMPOSITION FOR PREVENTING FUNGAL SPOILAGE IN POST-HARVEST FRUITS, VEGETABLES AND FLOWERS, METHOD AND USE THEREOF**

ZUSAMMENSETZUNG ZUR VERHINDERUNG VON PILZBEFALL IN FRÜCHTEN, GEMÜSE UND BLUMEN NACH DER ERNTE, VERFAHREN UND VERWENDUNG DAVON

COMPOSITION POUR EMPÊCHER LA DÉTÉRIORATION PAR DES CHAMPIGNONS DES FRUITS, LÉGUMES ET FLEURS APRÈS LA RÉCOLTE, SON PROCÉDÉ ET SON UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Validation States:
**MA TN**

(43) Date of publication of application:
**23.08.2023 Bulletin 2023/34**

(73) Proprietor: **Biobab R&D, S.L.**
**28002 Madrid (ES)**

(72) Inventors:
• **FRANCESCHINI SARRIA, André Lucio**
**Agüimes (ES)**
• **HORCHE TRUEBA, Ignacio**
**Agüimes (ES)**

(74) Representative: **Clarke, Modet y Cía., S.L.**
**C/ Suero de Quiñones 34-36**
**28002 Madrid (ES)**

(56) References cited:
**WO-A1-2016/170531     WO-A1-2018/162449**
**CN-A- 110 946 848**

• KEN-ICHI HARADA ET AL: "Blue Color Formation of Cyanobacteria with �2-Cyclocitral", JOURNAL OF CHEMICAL ECOLOGY, KLUWER ACADEMIC PUBLISHERS-PLENUM PUBLISHERS, NE, vol. 35, no. 11, 20 November 2009 (2009-11-20), pages 1295 - 1301, XP019771017, ISSN: 1573-1561, DOI: 10.1007/S10886-009-9706-5
• FRATERNALE DANIELE ET AL: "Essential Oil Composition and Antifungal Activity of Aerial Parts of Ballota nigra ssp foetida Collected at Flowering and Fruiting Times", NATURAL PRODUCT COMMUNICATIONS, vol. 9, no. 7, 1 July 2014 (2014-07-01), US, XP055947409, ISSN: 1934-578X, Retrieved from the Internet <URL:https://journals.sagepub.com/doi/pdf/10.1177/1934578X1400900733> DOI: 10.1177/1934578X1400900733
• MEDJAHED FATIHA ET AL: "Chemical profile and antifungal potential of essential oils from leaves and flowers of Salvia algeriensis (Desf.): A comparative study", CHILEAN JOURNAL OF AGRICULTURAL RESEARCH, vol. 76, no. 2, 20 March 2016 (2016-03-20), pages 195 - 200, XP055947416, Retrieved from the Internet <URL:http://www.bioline.org.br/pdf?cj16027> [retrieved on 20220730], DOI: 10.4067/S0718-58392016000200009

- **NIDAL JARADAT ET AL: "Chemical composition, anthelmintic, antibacterial and antioxidant effects of essential oil", BMC COMPLEMENTARY AND ALTERNATIVE MEDICINE, BIOMED CENTRAL LTD, LONDON, UK, vol. 16, no. 1, 26 October 2016 (2016-10-26), pages 1 - 7, XP021239408, DOI: 10.1186/S12906-016-1408-2**

(52) Cooperative Patent Classification (CPC): (Cont.)

C-Sets
**A01N 35/02, A01N 25/12, A01N 43/90;
A01N 35/02, A01N 25/12, A01N 65/28;
A01N 35/02, A01N 43/90;
A01N 35/02, A01N 65/28**

**Description**

TECHNICAL FIELD

The present invention relates to protecting post-harvest fruits, vegetables and flowers against attack by decay-causing organisms such as fungi. In particular, the present invention relates to a composition that comprises beta-cyclocitral as active ingredient and their use for preventing fungal spoilage in post-harvest fruits, vegetables and flowers. The invention also relates to a method for preventing fungal spoilage in post-harvest fruits, vegetables and flowers.

BACKGROUND OF THE INVENTION

Fruits and vegetables are important components of human diets all over the world. They are noted for their high moisture contents, and for providing good measures of amino acids, minerals and vitamins to their consumers. They are reported to afford their best benefits especially when consumed fresh. However, damages incurred during harvesting or handling, physiological changes and pathological attacks during storage are known to reduce their shelf-lives, affect their nutrient quality and possible health benefits [1].

Post-harvest loss can be defined as the degradation in both quantity and quality of a food production from harvest to consumption. Quality losses include those that affect the nutrient/caloric composition, the acceptability, and the edibility of a given product [2].

In general, post-harvest losses of fruits and vegetables is influence by many factors [3]. These factors include losses due to physical, physiological, mechanical, and hygienic conditions. Fruits and vegetables are mainly characterized by high level metabolic activities and known to posse's short shelf life. As a result of these factors, substantial percentage of loss occurs between harvesting to consumption of the produce [4,5].

In addition, other factors such as insect and mite injury, diseases which occur due to non-infectious pathogens and pathological rots also cause post-harvest loss of fruits and vegetables. However, among the causes, the pathological rots are the most serious which is followed by mechanical injury. Pathological rots in combination with mechanical damage cause serious damage to the perishables [6,7].

Environmental factors such as temperature, relative humidity and oxygen balance most especially during storage are also greatly responsible for damage also environmental conditions such as temperature and humidity are responsible for rendering fruits and vegetables susceptible for pathological attacks.

Fruits and vegetables are also prone to damage by microbial attack. Microbes-induced rots and deteriorations usually begin around wound sites and are exacerbated by moisture and insect migration into store houses. Between 10-50 % agricultural produce losses and food wastages are reported to occur post-harvest [1].

The microbial spoilage is mainly caused by fungi, bacteria, yeast and moulds. However, a significant portion of losses of fruits and vegetables during post-harvest period is attributed to diseases caused by fungi and bacteria. The succulent nature of fruits and vegetables makes them easily invaded by these organisms [8]. Many of the fungal pathogens are already present in the unripe fruit but remain quiescent during fruit grown until a particular phase of fruit ripening and senescence [17].

Food losses due to fungal spoilage are common for perishable foods, such as fruits and vegetables, with sources of contamination ranging from pre-harvest (irrigation water, soil, contaminated seeds) to post-harvest steps (handling, storage and transportation, cross-contamination).

Fungal spoilage can also occur on other products such as flowers. Once the spoilage occurs, the flowers are rarely suitable for commercialization. Cut flowers are a highly perishable commodity, which are often traded over long distances because the centers of production are located mostly near the equator-while the main consumers are in Europe and North America. The main overall postharvest problem are temperature management, hydration and flower food management, and the presence of fungal pathogens (specially Botrytis) [18]. Owing to multiple uncertainties along the supply chain, microbial contamination leading to spoilage and postharvest losses can occur at any of the stages in the continuum from farm or field to consumer. Therefore, postharvest treatments are essential to minimize microbial spoilage and reduce the risk of pathogen contamination for fresh fruit, vegetables [9] and flowers.

Various postharvest physical, chemical and gaseous treatments may be applied to maintain fresh-like quality with high nutritional value and meet safety standards of fresh products. These postharvest treatments are typically combined with appropriate management of storage temperatures.

The most common choice for many years has been chlorine treatment in the form of washes with dissolved hypochlorite salts. Alternative chemical treatments include chlorine dioxide ($ClO_2$), alcohols, copper sulphate ($CuSO_4$), organic acids, hydrogen peroxide ($H_2O_2$), ozone gas ($O_3$) and peracetic acid (PAA).

A common challenge with most chemical treatments is their effectiveness at dosages and treatment times that do not also adversely affect the produce. Additional concerns with specific treatments are low chemical stability ($H_2O_2$, PAA, $O_3$), safety concerns in factories ($ClO_2$, PAA, $O_3$) and toxicity of residues ($CuSO_4$, $ClO_2$) [11,12].

The strategies needed to manage these fungi are evolving, given the growing incidence of fungicide resistance, tightening regulations of chemicals use and market trends imposing new food-preservation challenges [10].

Even though the most effective methods to control fruits and vegetables spoilage are achieved by chemical additives, their negative consumer perception and the more severe regulations on the use of fungicides have increased an interest in new alternatives to protect food products by replacing synthetic agents with natural compounds [13].

Natural antifungals can be obtained from different sources, including plants, animals and microorganisms. Plant secondary metabolites are an important source of antifungal bioactive substances, and include essential oils, phenolic compounds, flavonoids and alkaloids among others [14].

Fraternale Daniele et al. (2014) ( "Essential oil composition and antifungal activity of aerial parts of Ballota nigra ssp foetida collected at flowering and fruiting times". Natural Product Communications, 9(7)), describes a comparative study of the antifungal activity of extracts of *Ballota nigra L. ssp. Foetida* deriving either from the fruits or from the flowers of the perennial herb. The main components of the extracts were: β-caryophyllene, caryophyllene oxide and germacrene-D.

Medjahed, F., et al. (2016) ("Chemical profile and antifungal potential of essential oils from leaves and flowers of Salvia algeriensis (Desf.): A comparative study". Chilean journal of agricultural research, 76(2), 195-200), describes a study of biological activities of essential oils from Salvia algerensis. The oil from the leaves is more active than the oil from the flowers and shows activity against the fungi Alternaria and Fusarium. The major constituents in leaves oil were benzaldehyde, eugenol and phenylethyl alcohol. In the flowers, the major constituents were viridiflorol, globulol, and α-cadinene.

CN110946848A discloses a composition bactericide with bacteriostatic or bactericidal activity which comprises some plant essential oils. The composition comprises a complex mixture of linalool, terpilenol, geraniol, beta-cyclocitral, nerol, myrcene, ocimene, ionone and 2H-beta-ionone.

WO2016/170531A1 discloses a microcapsule including a core including a complex mixture of essential oils or derivatives thereof, and a shell comprising an interpolymeric complex of at least one polyacid and at least one other polymer; wherein the interpolymeric complex is crosslinked with at least one multivalent cationic moiety. The microcapsules may be used to prevent or inhibit crop damage by infection just prior to harvesting or post-harvest infections in crop.

Compounds derived from plants, chitosan, lactoferrin, and biocontrol agents (lactic acid bacteria, antagonistic yeast and their metabolites) are able to control the decay caused by fungi in a wide variety of foods [13].

One example in the state of the art of the use of natural compounds to protect food products is EP3380413A1. The patent application EP3380413A1 describes an antimicrobial solution comprises the following three active substances derived from plants: citral, hexanal and 2-(E)-hexenal, to delay alteration phenomena linked to the development of spoilage microorganisms (molds, yeasts, bacteria, agents for rot) of fruit and vegetable products. Specifically, the antimicrobial solution is spread on the surface of a transport packaging. However, the use of natural compounds, as hexanal and 2-(E)-hexenal, provides changes in the flavour and quality of food products.

Therefore, there is a need to find natural compounds that inhibit or delay the growth of fungi in post-harvest fruits, vegetables and flowers and do not affect the organoleptic properties or quality, extending the shelf life of said products.

## DESCRIPTION OF THE INVENTION

The inventors of the present invention, after extensive and exhaustive research, have surprisingly found that beta-cyclocitral (β-cyclocitral) provides excellent results in the preservation of post-harvest fruits, vegetables and flowers. Due to the fungistatic activity that said compound show, it can be used in substitution of current treatments or in conjunction with them to inhibit or delay the growth of fungi and to preserve and prolong shelf life of post-harvest fruits, vegetables and flowers.

Therefore, the present invention solves the technical problems present in the state of the art and mentioned above.

In a first aspect, the present invention refers to a preservative composition for preventing fungal spoilage in post-harvest fruits, vegetables and flowers comprising beta-cyclocitral (β-cyclocitral) and eucalyptol. The inventors of the present invention have found that beta-cyclocitral (β-cyclocitral) provides excellent results in the preservation of post-harvest fruits, vegetables and flowers. Specifically, this compound inhibits or delay fungal growth on post-harvest fruits, vegetables and flowers. As a result, the preservation is improved, and the shelf life of these products is prolonged. In addition, the organoleptic properties of the fruit and vegetables remain intact.

Furthermore, Eucalyptol (1,8-cineole) is an essential oil that is widely used in the field of medicine (such as antibacterial, expectorant, anti-inflammatory or antihypertensive agent). Eucalyptol possesses relatively strong antimicrobial properties against many important pathogens and spoilage organisms [19]. Thanks to this property, it has been tested for use in combination with beta-cyclocitral to inhibit or delay fungal growth on fruits, vegetables and post-harvest fruits.

Target fruits, vegetables and flowers to be prevented of fungal spoilage within the scope of the present invention comprise e. g. the following species: pomes, stone fruit and soft fruit (apples, pears, plums, peaches, cherries, mangos, strawberries, raspberries and blackberries), citrus fruit (oranges, lemons, grapefruit, mandarins), vegetables (spinach, lettuce, asparagus, cabbages, carrots, tomatoes, paprika, avocados, cucumber and eggplant), ornamental flowers (roses, orchids, tulips, daffodils, marigold, petunia, bougainvillea, and lilies) and edible flowers (citrus blossom, clover, daisies, dandelions, hibiscus, honeysuckle, lavender, lilac, mums, nasturtium, pansies, sunflowers and violets). This list does not represent any limitation.

The preservative composition of the present invention can be in any formulation usual in the field as long as it is suitable for the purpose of the present invention. When formulating the composition of the present invention, an inert carrier may be added as necessary, and a suitable dosage form such as a suspension, emulsion, powder, wettable powder, granular wettable powder, granule, microcapsule, capsule, or a tablet, among others.

According to the present invention, the combination of beta-cyclocitral (β-cyclocitral) and eucalyptol has been shown to be effective against fungal spoilage in post-harvest fruits, vegetables and flowers. Preferably, the ratio of beta-cyclocitral and eucalyptol present in the composition of the present invention is 1:1.

In a second aspect, the present invention refers to a method for preventing fungal spoilage in post-harvest fruits, vegetables and flowers that comprises applying a composition comprising beta-cyclocitral (β-cyclocitral) as active ingredient to the post-harvest products. The preservative composition is effective when in direct contact with the fruit, vegetable or flower or in close proximity to fruit, vegetable or flower even without direct contact.

In an embodiment, the preservative composition used in the method of the present invention comprises a further active ingredient which is eucalyptol.

In another embodiment, the preservative composition used in the method of the present invention is applied directly to the post-harvest fruits, vegetables and flowers or on the surface of the container or package of the post-harvest fruits, vegetables and flowers by spraying.

In another embodiment, the preservative composition used in the method of the present invention is applied by means of a sticker coated with the composition, which is adhered to the surface of the postharvest fruits, vegetables and flowers or on the packaging material of the fruits , vegetables and flowers.

In another embodiment, the preservative composition used in the method of the present invention is applied directly to the post-harvest fruits, vegetables and flowers or on the surface of the container or package of the post-harvest fruits, vegetables and flowers by means of a controlled release diffuser which comprises a carrier and the composition.

The carrier can be a particulate porous material, a cellulose-based material or a wax-based material.

The particulate porous material can be selected from the group consisting of a zeolite, a silica, a porous carbon, and a mixture thereof. The composition is releasably loaded into the pores of said particulate porous material. A typical method for loading the composition of the present invention into a particulate porous material includes the steps of spraying the composition or a solution of the composition onto the particulate porous material followed by stirring the solid mixture or suspension to obtain the composition-loaded particulate porous material.

When the carrier is a cellulose-based material, the composition is impregnated on the cellulose-based material. Typical impregnation methods are dipping the material in the composition of the present invention or spraying the composition of the present invention onto the material.

When the carrier is a wax-based material, the composition is impregnated on the wax-based material. Typical impregnation methods are dipping the material in the composition of the present invention or spraying the composition of the present invention onto the material.

The wax-based material can be selected from animal and plant waxes (beeswax, carnauba wax, candelilla wax, sugar cane wax, rice bran wax, sunflower wax, among others) and petroleum derived waxes (paraffin and microcrystalline wax, among others).

In a third aspect, the present invention refers to the use of a preservative composition comprising beta-cyclocitral (β-cyclocitral) as active ingredient for preventing fungal spoilage in post-harvest fruits, vegetables and flowers.

In an embodiment, the preservative composition comprises a further active ingredient which is eucalyptol.

The fungal spoilage can be produced by fungus belonging to any of the following families: *Sclerotiniaceae, Davidiellaceae, Glomerellaceae, Trichocomaceae, Pleosporaceae, Nectriaceae, Endomycetaceae* and *Mucoraceae.*

More specifically, fungus are *Rhizopus, Aspergillus, Penicillium, Alternaria, Fusarium, Cladosporium, Botrytis, Geotrichum, Colletotrichum, Monilinia* or combinations thereof.

BRIEF DESCRIPTION OF DRAWINGS

The following figures are described below. These illustrate the exemplary embodiments and are not limiting their scope.

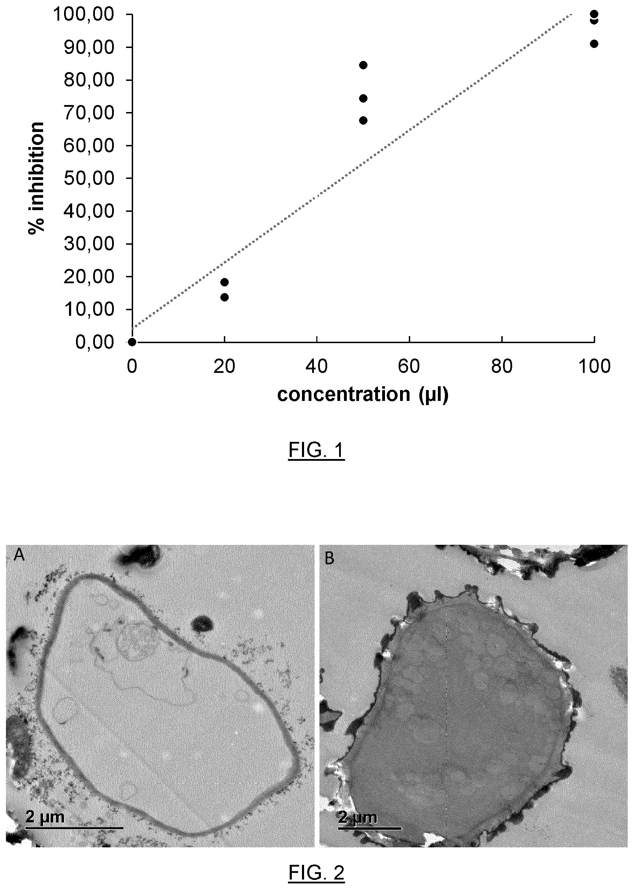

Figure 1 shows an analytical curve of % inhibitory for *Monilinia sp* exposed to three different doses of beta- cyclocitral (β-CC). Analytical curve was constructed for determination of the MID using three different doses of β-CC (20, 50 and

100 $\mu$L). The linear regression model was y = c + bx, where c is the intercept and b is the slope of the fitted line. The strength of the relationship in each case was judged in terms of the proportion of variation explained, R2, and the significance (p < 0.05) of the F-test from the analysis of variance (ANOVA) accompanying the regression. Them the linear model was y = 1,01X + 4,2047 and R2 is 0,8982. Based on the model it was found the doses that inhibit 50% of mycelium fungi is 45,34 $\mu$L of $\beta$-CC.

Figure 2 shows scanning electron microscope observations of *Monillia sp.* spores incubated at 25°C for 48 h exposed to the composition of the present invention (A) and not exposed to the composition of the present invention (B). Difference was observed in the morphology of *Monillia sp.* spores exposed.

Figure 3 shows the inhibitory effect on the spore germination of samples of *Rhizopus sp.* exposed to 50 $\mu$L of $\beta$-CC (A) versus control (B).

Figure 4 shows scanning electron microscope observations of *Rhizopus sp.* spores incubated at 25°C for 48 h exposed to the composition of the present invention (A) and not exposed to the composition of the present invention (B). Difference was observed in the morphology of of *Rhizopus sp* spores exposed.

Figure 5 shows strawberries exposed to the composition of the present invention (A) showed less fungi contamination when compared to the strawberries not exposed (B).

Figure 6 shows cherries previously exposed to the composition of the present invention that were not suitable for consumption (A1) and those that were suitable (A2). Cherries not exposed to the composition of the present invention (control fruits) that were not suitable for consumption (B1) and those that were suitable (B2) are also shown.

Figure 7 shows roses exposed to the composition of the present invention (A) showed less spots when compared to the roses not exposed (B).

Figure 8 shows the contents of sucrose, glucose, and fructose (mg/g) of strawberries exposed to $\beta$-CC, $\beta$-CC/Eucalyptol and no exposed (Control).

Figure 9 shows Total Sweetness Index (TSI) strawberries exposed to $\beta$-CC, $\beta$-CC/Eucalyptol and no exposed (Control).

Figure 10 shows Sweetness Index (SI) strawberries exposed to $\beta$-CC, $\beta$-CC/Eucalyptol and no exposed (Control).

DESCRIPTION OF EMBODIMENTS

Example 1. In vitro tests on fungi isolated from strawberries *(Monilinia sp)* exposed to the preservative composition of the present invention (only $\beta$-cyclocitral)

The fungi grown on strawberries was isolated and cultured on potato dextrose agar (PDA, Condalab, Madrid Spain) The fungus was identified as *Monilinia sp.*

Antifungal activity was determined by the vapor-agar contact method previously described by Sekiyama et al. [15]. Fungi were cultured on potato dextrose agar (PDA) medium at 27°C for a week. Fungal spores were then inoculated in the center of PDA plates which were aseptically placed in a chamber without lids.

A controlled release diffuser as described in examples 1 and 2 was used. In this example 3 doses of $\beta$-cyclocitral ($\beta$-CC) were used: 20, 50 and 100 $\mu$L.

The diffusers were introduced into the chambers, 6 cm far from the PDA plate, followed by proper sealing. Incubation in the chambers was performed at 27°C for 3 -5 days. The inhibitory activity was evaluated by measuring the diameter of colonies formed by the tested fungal strains. The minimum inhibitory dose (MID) was defined as the lowest concentration (mg/L in air) of volatile compounds which inhibited colony formation of test fungi by 50%.

Figure 1 shows the results obtained. At concentrations higher than 50 $\mu$L an inhibition of more than 60% is obtained and for concentrations of 100 $\mu$L an inhibition of 80-100% is achieved. Scanning electron microscope images were taken for the fungus Monilinia sp. exposed to 50 $\mu$L of $\beta$-cyclocitral and not exposed. The electron micrographs were taken in the JEOL 1400 plus Electron microscope (Japan) at 100 kV and equipped with a GATAN ORIUS 200 high resolution CCD camera.

The mycelium was fixed with a 1% (w/v) osmium tetroxide solution in distilled water at RT for 1 h. The mycelium was washed with acetone (30, 50, 70, 80, 90, 95, 100, 100%) eight times for 15 min each and was finally immersed in a tertbutyl alcohol solution three times for 30 min and dehydrated. The sample was freeze-dried. Subsequently, the sample was sputtercoated with platinum-palladium (10 nm) using a Hitachi E-1030 Ion Sputter (Hitachi).

Figure 2 shows the scanning electron microscope images obtained . Difference was observed in the morphology of *Monillia sp.* spores exposed to β-CC. Spores exposed to β-CC (A) for 72 h show a clearer membrane and show a slight decomposition compared to unexposed spores (B).

Example 2. In vitro tests on fungi isolated from strawberries *(Monilinia sp)* exposed to a mixture of β-cyclocitral (β-CC) and Eucalyptol

The fungi grown on strawberries was isolated and cultured on potato dextrose agar (PDA, Condalab, Madrid Spain) The fungus was identified as *Monilinia sp.*

Fungal spores were then inoculated in the center of the compartment with PDA (40 mm diameter) and a small piece of cellulose with different volume of β-cyclocitral (β-CC) (composition of the present invention) and Eucalyptol was placed in one of the empty compartments. The plates were incubated at 27° C for 3-5 days and the growth area of the mycelium and % of inhibition was measured.

Table 1 shows the % of inhibition of *Monilinia sp.* exposed to 25 μL of β-CC, 25 μL of Eucalyptol and a mixture of Eucalyptol and β-CC at two different doses (25 μL and 12,5 μL).

Eucalyptol alone does not show any effect of inhibition and the grow was similar to control (not exposed) but when in mixture with β-CC increased the % of inhibition of β-CC in 86,41% when compared to β-CC alone 78,22%. When the doses are reduced to 50% (12,5 μL of β-CC) it is noticed that the activity of β-CC is still high (~70%).

**Table 1. % Inhibition of *Monilinia sp.* exposed to 25 μL of β-CC, 25 μL of Eucalyptol and a mixture of Eucalyptol and β-CC at two different doses (25 μL and 12,5 μL).**

| Samples | % Inhibition |
|---|---|
| β-CC 25 μl + eucalyptol 25 μl | 86,41 |
| β-CC 12,5 μl + eucalyptol 12,5 μl | 69,98 |
| β-CC 25 μl | 78,22 |
| Eucalyptol 25 μl | 0,00 |
| Control | 0,00 |

Example 3. In vitro tests of other filamentous fungi *(Phytophtera nicotiana, Taphrina deformans, Colletotrichum and Rhizopus sp.)* exposed to the preservative composition of the present invention (only β-cyclocitral)

Inhibitory effects on the spore germination of other filamentous fungi, specifically *Phytophtera nicotiana, Taphrina deformans, Colletotrichum and Rhizopus sp.,* were examined by the vapor-agar contact method described in example 1 with a slight modification as follows. Fungi were cultured on potato dextrose agar (PDA) medium at 27°C for a week. It was used petri dish with three compartment, one compartment was filled out with PDA and another two was kept empty,

Fungal spores were then inoculated in the center of the compartment with PDA (40 mm diameter) and a small piece of cellulose with 50 μL of β-cyclocitral (β-CC) (composition of the present invention) was placed in one of the empty compartments. The plates were incubated at 27° C for 3-5 days and the growth area of the mycelium and % of inhibition was measured.

Table 2 shows the results obtained for each of the fungi. 100% growth inhibition of all fungi was obtained when the sample was exposed to the composition of the invention.

**Table 2. Growth area and % inhibition of fungi in example 5 for samples exposed to β-CC versus control.**

| Fungi | | Growth area (cm$^2$) | % Inhibition |
|---|---|---|---|
| *Taphrina deformans* | β-CC | 0 | 100 |
| | Control | 57,5 | 0 |
| *Rhizopus sp.* | β-CC | 1,45 | 62,55 |
| | Control | 4,03 | 0 |

(continued)

| Fungi | | Growth area (cm²) | % Inhibition |
|---|---|---|---|
| *Colletotrichum* | β-CC | 6,15 | 99,00 |
| | Control | 19,17 | 0 |

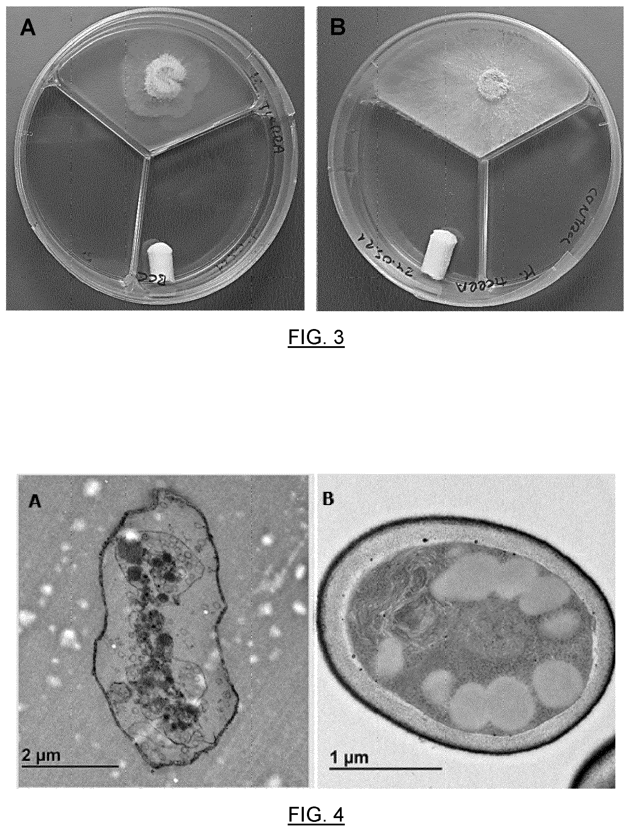

Additionally, figure 3 shows the result obtained for the *Rhizopus sp* sample.

Scanning electron microscope images were taken for the fungus *Rhizopus sp.* exposed to 50 μL of β-cyclocitral and not exposed. The electron micrographs were taken according to the method described in example 1.

Figure 4 shows the scanning electron microscope images obtained . Difference was observed in the morphology of *Rhizopus sp.* spores exposed to β-CC. Spores exposed to β-CC (A) for 72 h show a clearer and thinner membrane and a difference in structure, less homogeneous compared to non-exposed spores (B).

Example 4. In vivo tests on strawberries exposed to the preservative composition of the present invention (only β-cyclocitral)

Mature strawberries were brought directly from local market and sent to laboratory within 2 hours. The strawberries were divided into two equal groups and each group of strawberries was placed in a box.

One group of strawberries were not exposed to any product (control) and another group of strawberries were exposed to a controlled release diffuser that contains the composition of the present invention. The controlled release diffuser was prepared using cellulose sheets (0.2 cm thick) in pieces (2x1 cm) and impregnated with 50 μL of pure β-cyclocitral (β-CC). These sheets were inserted into polyethylene bags (3x3 cm) that were subsequently heat-sealed.

The diffuser was place in the middle of one box from 10 cm to the surface of strawberries. The two boxes were covered with a plastic bag to keep inside a homogeneous atmosphere. Boxes were kept in an acclimated chamber (20°C, darkness) until the symptoms of fungi degradation (approx. 7 days).

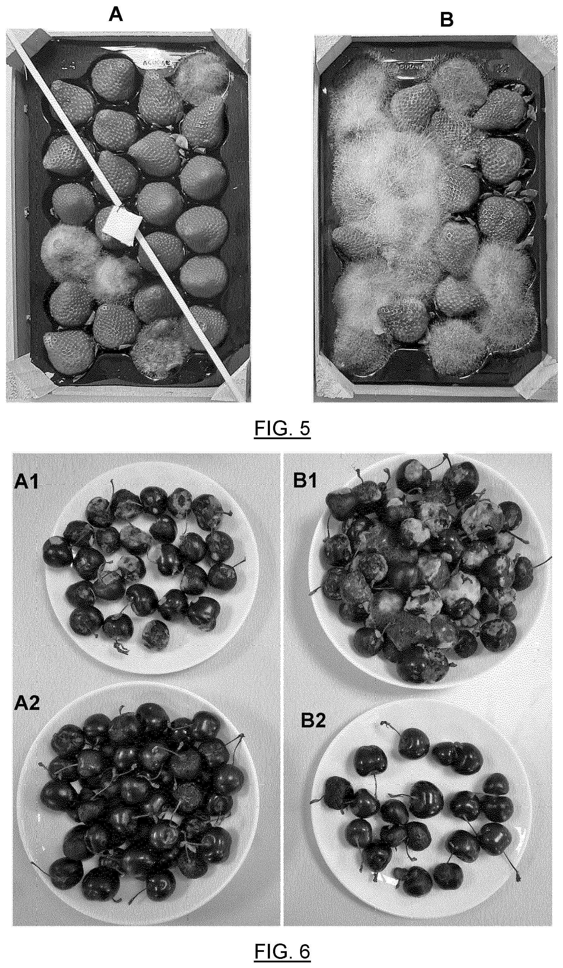

Figure 5 shows the results obtained, where there is less rot in the strawberries that were exposed to the composition of the present invention (A) compared to the control strawberries (B).

Example 5. In vivo tests on cherries exposed to the preservative composition of the present invention (only β-cyclocitral)

Mature cherries were brought directly from Spanish farm and sent to laboratory within 24 hours. The cherries were divided into two equal groups and each group of cherries was placed in a plate.

One group of cherries were not exposed to any product (control) and another group of cherries were exposed to a controlled release diffuser that contains the composition of the present invention. The controlled release diffuser was prepared using cellulose sheets (0.2 cm thick) in pieces (2x1 cm) and impregnated with 50 μl of pure β-cyclocitral (β-CC). These sheets were inserted into polyethylene bags (3x3 cm) that were subsequently heat-sealed.

The diffuser was placed in the bottom of one plate. The two plates were covered with a plastic bag to keep inside a homogeneous atmosphere. Boxes were kept in an acclimated chamber (20°C, darkness) for 6 days.

Finally, the cherries (control and exposed to the composition) were separate into two groups: fruits able to consume (not sign of fungi) and fruits not able to consume (signs of fungi).

Figure 6 shows the results obtained, where it can be seen that approximately 65% of cherries exposed to the composition of the present invention were suitable for consumption (A2) versus approximately 23% of cherries not exposed to the composition were suitable for consumption (B2).

Example 6. In vivo tests on roses exposed to the preservative composition of the present invention (only β-cyclocitral)

Roses were brought directly from local market and sent to laboratory within 12 hours. The roses were divided into two equal groups and each group of roses was placed in a jar filled with tap water.

One group of roses were not exposed to any product (control) and another group of roses were exposed to a controlled release diffuser that contains the composition of the present invention. The controlled release diffuser was prepared using cellulose sheets (0.2 cm thick) in pieces (2x1 cm) and impregnated with 50 μL of pure β-cyclocitral (β-CC). These sheets were inserted into polyethylene bags (3x3 cm) that were subsequently heat-sealed.

The diffuser was place in the middle of jar from 20 cm to the surface of the petals. The two jars were covered with a plastic bag to keep inside a homogeneous atmosphere. jars were kept in an acclimated chamber (20°C, darkness) until the symptoms of fungi degradation (approx. 7 days).

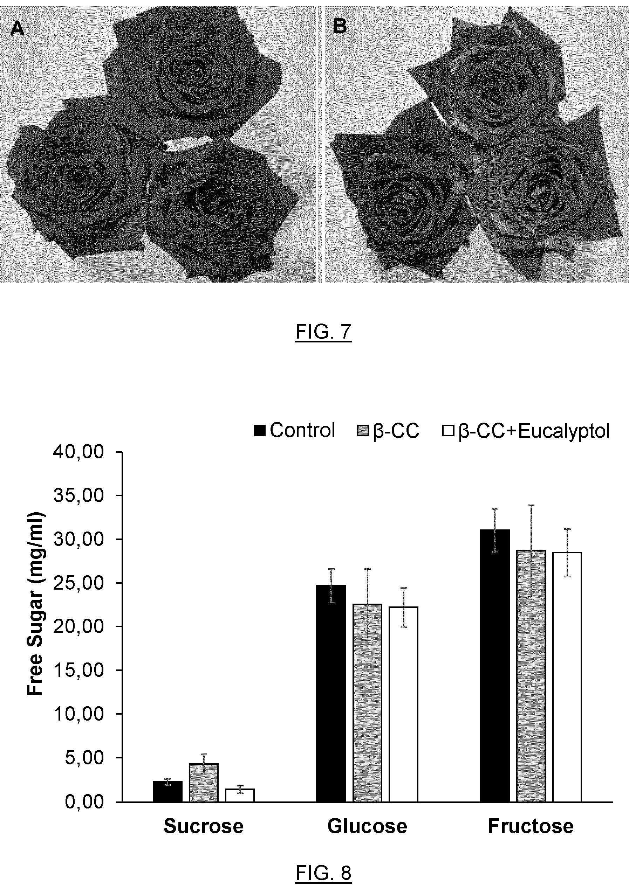

Figure 7 shows roses exposed to the composition of the present invention (A) showed less spots when compared to the roses not exposed (B).

<u>Example 7. Organoleptic properties analysis (volatile organic compounds) of strawberries exposed to the preservative composition of the present invention (only β-cyclocitral) and a mixture of β-cyclocitral and Eucalyptol</u>

To ensure that the organoleptic properties of the fruit are not altered by the use of the composition of the present invention, the following test was carried out.

The presence of volatile organic compounds (VOCs) was analysed. Three groups of samples were analysed: unexposed strawberries (control), strawberries exposed to β-cyclocitral (50 μL), and strawberries exposed to β-cyclocitral /Eucalyptol (50 μL) for 5 days.

On the 5th day of storage, all samples of strawberries were transferred into a 500mL headspace bottle and sealed immediately. The samples were incubated at 22°C for 2h.

After equilibration, the bottom of the vessel was enclosed around the fruit. Air that had been purified by passage through an activated charcoal filter (BDH, 10-14 mesh) was pushed into (750 m·min$^{-1}$) and pulled (700 ml·min$^{-1}$) out of the vessel. VOCs were trapped onto Porapack™ (Porous Polymer Adsorbent) 50/80 mesh (50 mg; Supelco, Bellefonte, USA) held in glass tubing (5 mm outer diameter) by two plugs of silanised glass wool. The Porapack™ tube was conditioned by washing with redistilled diethyl ether (2 ml) and heating at 130°C for 4 h under a stream of purified nitrogen.

VOCs collected on the Porapak™ were eluted with 750 μL of redistilled diethyl ether and the samples were stored at -20°C until chromatographic analysis.

For the analysis, four samples (1 μL) from each treatment and control were analysed on an Agilent 7820A Gas Chromatograph (Agilent Technologies, Santa Clara, California, USA), equipped with a cool column injector, flame ionization detector (FID), and a HP-1 capillary GC column (50 m × 0.32 mm internal diameter x 0.52 μm film thickness). Hydrogen was the carrier gas. The oven temperature was maintained at 30°C for 0.1 min, then programmed to increase at 10 °C·min$^{-1}$ until 250°C, and then held for 38 min.

Mass spectra were obtained by electron impact ionization at 70 eV; the ion species were of a normal ion (MF-Linear) and the TIC range was from 0 m/z to 600 m/z. The spectrometric data were compared with those from the NIST Hewlett-Packard 59942C original library mass-spectra.

Table 3 shows the results obtained. No changes were observed in the VOCs released through the fruits. Therefore, it is confirmed that the fruits exposed to the composition of the present invention don't change its profile of VOCs and keep its organoleptic features.

**Table 3. VOCs detected in control, β-CC, and β-CC/Eucalyptol samples.**

| VOC | Retention time (min) | Control | β-CC | β-CC/Eucalyptol |
|---|---|---|---|---|
| Ethyl butyrate | 7,85 | Detected | Detected | Detected |
| Ethyl 2-methylbutyrate | 11,20 | Detected | Detected | Detected |
| Methyl hexanoate | 14,13 | Detected | Detected | Detected |
| Isobutyl isobutyrate | 16,02 | Detected | Detected | Detected |
| Ethyl hexanoate | 16,10 | Detected | Detected | Detected |
| Hexyl acetate | 16,40 | Detected | Detected | Detected |
| 6-Methyl-5-hepten-2-ol | 17,17 | Detected | Detected | Detected |

<u>Example 8. Organoleptic properties analysis (Free Sugars, Total Sweetness Index (TSI) and sweetness Index (SI) of strawberries exposed to the preservative composition of the present invention (only β-cyclocitral) and a mixture of β-cyclocitral and Eucalyptol</u>

To ensure that the organoleptic properties of the fruit are not altered by the use of the composition of the present invention, the following test was carried out.

The content of free sugar, Total Sweetness Index (TSI) and sweetness Index (SI) were calculated. Three groups of samples were analysed: unexposed strawberries (control), strawberries exposed to β-cyclocitral (50 μL), and strawberries exposed to β-cyclocitral /Eucalyptol (50 μL) for 5 days.

On the 5th day of storage, all samples of strawberries were mashed using a pest and mortar, 10 g was placed in a falcon tube and centrifuged for 30 min, 4°C and 10000g.

200 μL of supernatant was added in a 1,5 mL vial, and 800 μL of distilled water was added. The vial was mixed and immediately analysed in a HPLC system (Agilent, model-e2695, USA) equipped with an Aminex Column 87H. The system was kept at 50°C, flow 0,6 ml.min$^{-1}$, mobile phase: HPLC water, IR detector, volume of injection 5 $\mu$L and the concentrations of the separated sugars were determined according to the corresponding standards: Glucose, Sucrose and Fructose.

The total sweetness index (TSI) is calculated by the following equation [16]:

$$TSI=1.00 \times sucrose + 0.76 \times glucose + 1.50 \times fructose$$

The sweetness index (SI) is calculated by the following equation:

$$SI= 1.00 \ x \ glucose + 2.30 \ x \ fructose + 1.35 \ x \ sucrose$$

The free sugar was estimated using an analytical curve for authentic standard of glucose, fructose and sucrose and expressed (mg/ml).

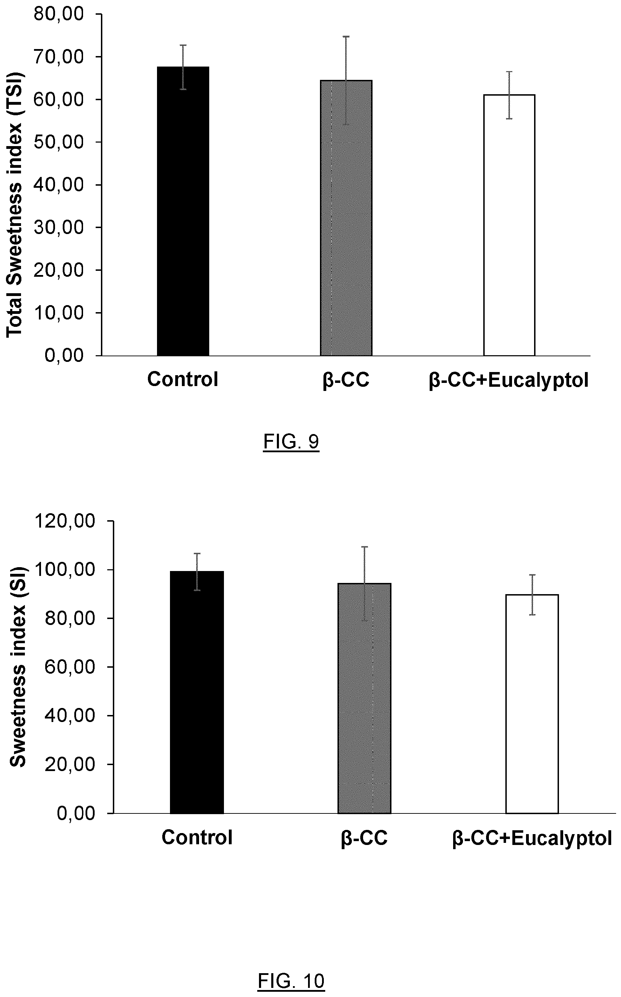

Figures 8, 9 and 10 shows the results obtained. No changes were observed in the concentration of glucose, fructose, and sucrose (Figure 8). The values obtained for TSI, and SI are very similar for the 3 samples analysed (Figures 9 and 10).

Therefore, it is confirmed that the fruits exposed to the product don't change its profile of sweetness and keep its organoleptic features.

REFERENCES

[1] Enyiukwu, D. N., Bassey, I. N., Nwaogu, G. A., Chukwu, L. A., & Maranzu, J. O. "Postharvest Spoilage and Management of Fruits and Vegetables: A Perspective on Small-Holder Agricultural Systems of the Tropics". Greener Trends in Plant Pathology and Entomology, vol. 3, no. 1, pp. 01-17 (2020).

[2] Kiaya, V. 2014. "Post-harvest losses and strategies to reduce them". Technical Paper on Postharvest Losses, Action Contre la Faim (ACF) 25.

[3] Yahaya, S. M., and Mardiyya, A. Y.. 2019. "Review of post-harvest losses of fruits and vegetables". Biomed. J. Sci. Tech. Res 13.4: 10192-10200.

[4] Hayatu, M. 2000. "Post-Harvest Physiological Studies of Some Selected Members of Family Solanaceae". Unpublished M. Sc thesis. Bayero University, Kano: 2-25.

[5] Sani M.Y, Alao, S.E.A. 2006. "Assessment of post-harvest fungi of Tomato (Lycopersicon esculentum) and Pepper (capsicum annum) from selected irrigated areas of Kano State". Journal of Bioscience 2: 53-56.

[6] Mustapha, Y., Yahaya, S.M. 2006. "Isolation and Identification of Postharvest fungi of Tomato (L. esculentum) and Pepper (Capsicum annum) sample from selected Irrigated sites in Kano". Biological and Environmental Science Journal for the Tropics 3: 139-141.

[7] Food and Agricultural Organization. 2011. FAO Statistical-Database. Rome, Italy.

[8] Elias, S.N.K., Shaw, M.W., Dewey, F.M. 2010. "Persistent symptomless, systemic and seed-borne infection of lettuce by Botrytis cinerea". European Journal of Plant Pathology 126(1): 61-71.

[9] Olaimat, A.N., Holley RA. 2012. "Factors influencing the microbial safety of fresh produce: a review". Food Microbiology 32, 1-19.

[10] Davies, C. R., Wohlgemuth, F., Young, T., Violet, J., Dickinson, M., Sanders, J. W., ... & Avery, S. V. 2021. "Evolving challenges and strategies for fungal control in the food supply chain". Fungal biology reviews, 36, 15-26.

[11] Bastarrachea, L.J., Alborzi, S., Tikekar, R.V., 2019. "Control strategies for postharvest microbiological safety of produce during processing, marketing, and quality measures (Chapter 12)". In: Biswas, D., Micallef, S.A. (Eds.), Safety and Practice for Organic Food. Academic Press, London, UK, pp. 259-270.

[12] Deng, L.-Z., Mujumdar, A.S., Pan, Z., Vidyarthi, S.K., Xu, J., Zielinska, M., Xiao, H.-W., 2019. "Emerging chemical and physical disinfection technologies of fruits and vegetables: a comprehensive review". Crit. Rev. Food Sci. Nutr. 60, 2481-2508.

[13] Ribes, S., Fuentes, A., Talens, P., Barat, J.M. 2017. "Prevention of fungal spoilage in food products using natural compounds: a review", Critical Reviews in Food Science and Nutrition.

[14] Ciocan, I. D., Bắra, I. 2007. *"Plant products as antimicrobial agents".* Universitatii Ale Ştiinţifice Analele Al I Cuza. 8:151-156.

[15] Sekiyama, Y., Mizukami, Y., Takada, A., et al. 1994. "Effect of mustard extract vapour on fungi and spore-forming bacteria". Journal of Antibacterial and Antifungal Agent. 24:171-8.

[16] Magwaza, L.S., Opara, U.L..2015. "Analytical methods for determination of sugars and sweetness of horticultural products-A review". Scientia Horticulturae, Volume 184, Pages 179-192.

[17] Alkan, N. and Fortes, A.M. 2015 "Insights into molecular and metabolic events associated with fruit response to post-harvest fungal pathogens". Frontiers Plant Science, Volume 6, article 889.

[18] Loyola, C. E.; Dole, J. M.; Dunning, R. 2019 "South and Central America cut flower production and postharvest survey". HortTechnology, Volume 29, no 6, pages 898-905.

[19] Safaei-Ghomi, J., & Ahd, A. A. 2010. "Antimicrobial and antifungal properties of the essential oil and methanol extracts of Eucalyptus largiflorens and Eucalyptus intertexta". Pharmacognosy magazine, 6(23), 172.

**Claims**

1. Preservative composition for preventing fungal spoilage in post-harvest fruits, vegetables and flowers comprising beta-cyclocitral and eucalyptol.

2. A method for preventing fungal spoilage in post-harvest fruits, vegetables and flowers, comprising applying a preservative composition comprising beta-cyclocitral as the only active ingredient to the post-harvest fruits, vegetables and flowers.

3. The method according to claim 2, wherein the composition further comprises eucalyptol.

4. The method according to any of claims 2 to 3, wherein the preservative composition is applied directly to the post-harvest fruits, vegetables and flowers or on the surface of the container or package of the post-harvest fruits, vegetables and flowers by spraying.

5. The method according to any of claims 2 to 3, wherein the preservative composition is applied by means of a sticker coated with the composition, which is adhered to the surface of the postharvest fruits and vegetables or on the packaging material of the fruits and vegetables.

6. The method according to any of claims 2 to 3, wherein the preservative composition is applied directly to the post-harvest fruits, vegetables and flowers or on the surface of the container or package of the post-harvest fruits, vegetables and flowers by means of a controlled release diffuser which comprises a carrier and the composition.

7. The method according to claim 6, wherein the carrier is selected from the group consisting of particulate porous material, cellulose-based material or wax-based material.

8. The method according to claim 7, wherein the carrier is a particulate porous material selected from the group consisting of a zeolite, a silica, a porous carbon and a mixture thereof, and the composition is releasably loaded into the pores of said particulate porous material.

9. The method according to claim 7, wherein the carrier is a cellulose-based material and the composition is impregnated on the cellulose-based material.

10. The method according to claim 7, wherein the carrier is a wax-based material and the composition is impregnated on the wax-based material.

11. Use of a preservative composition comprising beta-cyclocitral as the only active ingredient for preventing fungal spoilage in post-harvest fruits, vegetables and flowers.

12. The use according to claim 11, wherein the composition further comprises eucalyptol.

13. The use according to any one of claims 11 or 12, wherein the fungal spoilage is produced by fungus belonging to the families *Sclerotiniaceae, Davidiellaceae, Glomerellaceae, Trichocomaceae, Pleosporaceae, Nectriaceae, Endomycetaceae* and *Mucoraceae.*

14. The use according to claim 13, wherein fungus are selected from the group consisting of *Rhizopus, Aspergillus, Penicillium, Alternaria, Fusarium, Cladosporium, Botrytis, Geotrichum, Colletotrichum, Monilinia* or combinations thereof.

**Patentansprüche**

1. Konservierungsmittelzusammensetzung zum Verhindern des Pilzverderbs in Obst, Gemüse und Blumen nach der Ernte, umfassend Beta-Cyclocitral und Eucalyptol.

2. Verfahren zum Verhindern des Pilzverderbs in Obst, Gemüse und Blumen nach der Ernte, umfassend das Aufbringen einer Konservierungsmittelzusammensetzung, die Beta-Cyclocitral als einzigen Wirkstoff umfasst, auf das Obst, das Gemüse und die Blumen nach der Ernte.

3. Verfahren nach Anspruch 2, wobei die Zusammensetzung ferner Eucalyptol umfasst.

4. Verfahren nach einem der Ansprüche 2 bis 3, wobei die Konservierungsmittelzusammensetzung direkt auf das Obst, das Gemüse und die Blumen nach der Ernte oder auf die Oberfläche des Behälters oder der Verpackung des Obstes, des Gemüses und der Blumen nach der Ernte durch Besprühen aufgebracht wird.

5. Verfahren nach einem der Ansprüche 2 bis 3, wobei die Konservierungsmittelzusammensetzung mittels eines mit der Zusammensetzung beschichteten Aufklebers aufgebracht wird, der auf die Oberfläche des Obsts und Gemüses nach der Ernte oder auf das Verpackungsmaterial des Obsts und Gemüses aufgeklebt wird.

6. Verfahren nach einem der Ansprüche 2 bis 3, wobei die Konservierungsmittelzusammensetzung direkt auf das Obst, das Gemüse und die Blumen nach der Ernte oder auf die Oberfläche des Behälters oder der Verpackung des Obstes, des Gemüses und der Blumen nach der Ernte mittels eines Diffusors mit kontrollierter Freigabe aufgebracht wird, der einen Träger und die Zusammensetzung umfasst.

7. Verfahren nach Anspruch 6, wobei der Träger aus der Gruppe ausgewählt ist, die aus teilchenförmigem porösem Material, Material auf Cellulosebasis oder Material auf Wachsbasis besteht.

8. Verfahren nach Anspruch 7, wobei der Träger ein teilchenförmiges poröses Material ist, das aus der Gruppe ausgewählt ist, die aus einem Zeolith, einem Siliciumdioxid, einem porösen Kohlenstoff und einem Gemisch davon besteht, und die Zusammensetzung freisetzbar in die Poren des teilchenförmigen porösen Materials geladen ist.

9. Verfahren nach Anspruch 7, wobei der Träger ein Material auf Cellulosebasis ist und die Zusammensetzung auf dem Material auf Cellulosebasis imprägniert ist.

10. Verfahren nach Anspruch 7, wobei der Träger ein Material auf Wachsbasis ist und die Zusammensetzung auf dem Material auf Wachsbasis imprägniert ist.

11. Verwendung einer Konservierungsmittelzusammensetzung, die Beta-Cyclocitral als einzigen Wirkstoff umfasst, zum Verhindern des Pilzverderbs in Obst, Gemüse und Blumen nach der Ernte.

12. Verwendung nach Anspruch 11, wobei die Zusammensetzung ferner Eucalyptol umfasst.

13. Verwendung nach einem der Ansprüche 11 oder 12, wobei der Pilzverderb durch Pilze hervorgerufen wird, die zu den Familien *Sclerotiniaceae, Davidiellaceae, Glomerellaceae, Trichocomaceae, Pleosporaceae, Nectriaceae, Endomycetaceae* und *Mucoraceae* gehören.

14. Verwendung nach Anspruch 13, wobei die Pilze ausgewählt sind aus der Gruppe bestehend aus *Rhizopus, Aspergillus, Penicillium, Alternaria, Fusarium, Cladosporium, Botrytis, Geotrichum, Colletotrichum, Monilinia* oder Kombinationen davon.

**Revendications**

1. Composition conservatrice pour la prévention de l'altération fongique des fruits, légumes et fleurs après récolte, comprenant du bêta-cyclocitral et de l'eucalyptol.

2. Procédé de prévention de l'altération fongique des fruits, légumes et fleurs après récolte, comprenant l'application d'une composition conservatrice comprenant du bêta-cyclocitral comme seul ingrédient actif auxdits fruits, légumes et fleurs après récolte.

3. Procédé selon la revendication 2, dans lequel la composition comprend en outre de l'eucalyptol.

4. Procédé selon l'une quelconque des revendications 2 à 3, dans lequel la composition conservatrice est appliquée directement sur les fruits, légumes et fleurs après récolte ou sur la surface du récipient ou de l'emballage desdits fruits, légumes et fleurs après récolte par pulvérisation.

5. Procédé selon l'une quelconque des revendications 2 à 3, dans lequel la composition conservatrice est appliquée au moyen d'une étiquette enduite de ladite composition, laquelle est adhérée à la surface des fruits et légumes après récolte ou sur le matériau d'emballage desdits fruits et légumes.

6. Procédé selon l'une quelconque des revendications 2 à 3, dans lequel la composition conservatrice est appliquée directement sur les fruits, légumes et fleurs après récolte ou sur la surface du récipient ou de l'emballage desdits fruits, légumes et fleurs après récolte au moyen d'un diffuseur à libération contrôlée comprenant un support et ladite composition.

7. Procédé selon la revendication 6, dans lequel le support est choisi dans le groupe constitué d'un matériau poreux particulaire, d'un matériau à base de cellulose ou d'un matériau à base de cire.

8. Procédé selon la revendication 7, dans lequel le support est un matériau poreux particulaire choisi dans le groupe constitué d'une zéolite, d'une silice, d'un carbone poreux et d'un mélange de ceux-ci, et la composition est chargée de manière libérable dans les pores dudit matériau poreux particulaire.

9. Procédé selon la revendication 7, dans lequel le support est un matériau à base de cellulose et la composition est imprégnée sur ledit matériau à base de cellulose.

10. Procédé selon la revendication 7, dans lequel le support est un matériau à base de cire et la composition est imprégnée sur ledit matériau à base de cire.

11. Utilisation d'une composition conservatrice comprenant du bêta-cyclocitral comme seul ingrédient actif pour la prévention de l'altération fongique des fruits, légumes et fleurs après récolte.

12. Utilisation selon la revendication 11, dans laquelle la composition comprend en outre de l'eucalyptol.

13. Utilisation selon l'une quelconque des revendications 11 ou 12, dans laquelle l'altération fongique est produite par des champignons appartenant aux familles des *Sclerotiniaceae, Davidiellaceae, Glomerellaceae, Trichocomaceae, Pleosporaceae, Nectriaceae, Endomycetaceae* et *Mucoraceae.*

14. Utilisation selon la revendication 13, dans laquelle les champignons sont choisis dans le groupe constitué de *Rhizopus, Aspergillus, Penicillium, Alternaria, Fusarium, Cladosporium, Botrytis, Geotrichum, Colletotrichum, Monilinia* ou de combinaisons de ceux-ci.

FIG. 1

FIG. 2

FIG. 3

FIG. 4

FIG. 5

FIG. 6

FIG. 7

FIG. 8

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110946848 A
- WO 2016170531 A1

- EP 3380413 A1


**Non-patent literature cited in the description**

- **FRATERNALE DANIELE et al.** Essential oil composition and antifungal activity of aerial parts of Ballota nigra ssp foetida collected at flowering and fruiting times. *Natural Product Communications*, 2014, vol. 9 (7)
- **MEDJAHED, F. et al.** Chemical profile and antifungal potential of essential oils from leaves and flowers of Salvia algeriensis (Desf.): A comparative study. *Chilean journal of agricultural research*, 2016, vol. 76 (2), 195-200
- **ENYIUKWU, D. N.** ; **BASSEY, I. N.** ; **NWAOGU, G. A.** ; **CHUKWU, L. A.** ; **MARANZU, J. O.** Postharvest Spoilage and Management of Fruits and Vegetables: A Perspective on Small-Holder Agricultural Systems of the Tropics. *Greener Trends in Plant Pathology and Entomology*, 2020, vol. 3 (1), 01-17
- **KIAYA, V**. Post-harvest losses and strategies to reduce them. *Technical Paper on Postharvest Losses, Action Contre la Faim (ACF)*, 2014, vol. 25
- **YAHAYA, S. M.** ; **MARDIYYA, A. Y..** Review of postharvest losses of fruits and vegetables. *Biomed. J. Sci. Tech. Res*, 2019, vol. 13 (4), 10192-10200
- Post-Harvest Physiological Studies of Some Selected Members of Family Solanaceae. **HAYATU, M.** Unpublished M. Sc thesis. Bayero University, 2000, 2-25
- **SANI M.Y** ; **ALAO, S.E.A.** Assessment of postharvest fungi of Tomato (Lycopersicon esculentum) and Pepper (capsicum annum) from selected irrigated areas of Kano State''.. *Journal of Bioscience*, 2006, vol. 2, 53-56
- **MUSTAPHA, Y.** ; **YAHAYA, S.M.** Isolation and Identification of Postharvest fungi of Tomato (L. esculentum) and Pepper (Capsicum annum) sample from selected Irrigated sites in Kano''. *Biological and Environmental Science Journal for the Tropics*, 2006, vol. 3, 139-141
- FAO Statistical-Database. Food and Agricultural Organization, 2011

- **ELIAS, S.N.K.** ; **SHAW, M.W.** ; **DEWEY, F.M.** Persistent symptomless, systemic and seed-borne infection of lettuce by Botrytis cinerea. *European Journal of Plant Pathology*, 2010, vol. 126 (1), 61-71
- **OLAIMAT, A.N.** ; **HOLLEY RA.** Factors influencing the microbial safety of fresh produce: a review. *Food Microbiology*, 2012, vol. 32, 1-19
- **DAVIES, C. R.** ; **WOHLGEMUTH, F.** ; **YOUNG, T.** ; **VIOLET, J.** ; **DICKINSON, M.** ; **SANDERS, J. W.** ; **AVERY, S. V**. Evolving challenges and strategies for fungal control in the food supply chain''. *Fungal biology reviews*, 2021, vol. 36, 15-26
- Control strategies for postharvest microbiological safety of produce during processing, marketing, and quality measures (Chapter 12). **BASTARRACHEA, L.J.** ; **ALBORZI, S.** ; **TIKEKAR, R.V.** Safety and Practice for Organic Food.. Academic Press, 2019, 259-270
- **DENG, L.-Z.** ; **MUJUMDAR, A.S.** ; **PAN, Z.** ; **VIDYARTHI, S.K.** ; **XU, J.** ; **ZIELINSKA, M.** ; **XIAO, H.-W.** Emerging chemical and physical disinfection technologies of fruits and vegetables: a comprehensive review. *Crit. Rev. Food Sci. Nutr.*, 2019, vol. 60, 2481-2508
- **RIBES, S.** ; **FUENTES, A.** ; **TALENS, P.** ; **BARAT, J.M.** Prevention of fungal spoilage in food products using natural compounds: a review. *Critical Reviews in Food Science and Nutrition*, 2017
- **SEKIYAMA, Y.** ; **MIZUKAMI, Y.** ; **TAKADA, A. et al.** Effect of mustard extract vapour on fungi and spore-forming bacteria. *Journal of Antibacterial and Antifungal Agent.*, 1994, vol. 24, 171-8
- **MAGWAZA, L.S.** ; **OPARA, U.L.** Analytical methods for determination of sugars and sweetness of horticultural products-A review. *Scientia Horticulturae*, 2015, vol. 184, 179-192
- **ALKAN, N.** ; **FORTES, A.M.** Insights into molecular and metabolic events associated with fruit response to post-harvest fungal pathogens. *Frontiers Plant Science*, 2015, vol. 6

- **LOYOLA, C. E.** ; **DOLE, J. M.** ; **DUNNING, R.** South and Central America cut flower production and postharvest survey. *HortTechnology*, 2019, vol. 29 (6), 898-905

- **SAFAEI-GHOMI, J.** ; **AHD, A. A.** Antimicrobial and antifungal properties of the essential oil and methanol extracts of Eucalyptus largiflorens and Eucalyptus intertexta. *Pharmacognosy magazine*, 2010, vol. 6 (23), 172